# EUROPÄISCHE PATENTSCHRIFT

(11) **EP 0 790 153 B1**
(45) Veröffentlichungstag und Bekanntmachung des Hinweises auf die Patenterteilung: **08.09.1999**
(21) Anmeldenummer: 97101473.3
(22) Anmeldetag: 30.01.1997
(51) Int. Cl.: B60R 21/20

(54) **Einrichtung zum Befestigen eines Gassackmoduls**
Airbag module fastening
Dispositif de fixation d'un module de sac de sécurité gonflable

(30) Priorität: 14.02.1996 DE 29602630 U
(43) Veröffentlichungstag der Anmeldung: 20.08.1997
(73) Patentinhaber: TRW Occupant Restraint Systems GmbH & Co. KG, 73551 Alfdorf (DE)
(72) Erfinder: Fischer, Anton, 73572 Heuchlingen (DE)
(74) Vertreter: Degwert, Hartmut, Dipl.-Phys.

(56) Entgegenhaltungen:
- WO-A-95/15871
- DE-C- 4 433 259
- US-A- 5 087 069
- US-A- 5 333 897
- US-A- 5 409 256
- US-A- 5 423 568

## Beschreibung

Die Erfindung betrifft eine Einrichtung zum Befestigen eines Gassackmoduls an einem Fahrzeugteil, die als Rasteinrichtung ausgebildet ist, wobei durch Andrücken und/oder Drehen des Gassackmoduls ein Verriegelungskörper aus Federstahl in ein entsprechend geformtes Gegenstück eingreift, um so das Gassackmodul am Fahrzeugteil zu arretieren.

Bislang werden Gassackmodule, also üblicherweise ein zusammengefalteter Gassack mit einem Gasgenerator und einer integrierten Zündeinrichtung sowie einem diese Teile umgebenden Gehäuse, durch mehrere Schrauben an einem Fahrzeugteil befestigt. Diese Schrauben werden bei der Endmontage in einem Automobilwerk, z.B. mittels eines Steckschlüssels, in eine Lenkradnabe oder in ein anderes Teil im Fahrzeug, z.B. in einen Rahmenholm auf der Beifahrerseite, eingedreht, was aufwendig und kostenintensiv ist, zumal eine gute Zugänglichkeit nicht immer gegeben ist. Die Schrauben werden zudem oft anschließend verdeckt. Im Automobilwerk müssen für die Station zum Einbau der Gassackmodule die Schrauben und Abdeckteile dispositioniert werden, was ebenfalls aufwendig ist.

Eine Einrichtung nach dem Oberbegriff der Ansprüche 1 und 2 ist aus der US-A-5 087 069 bekannt. Bei dieser Einrichtung ist ein U-förmig gebogener Federklipp an einer fahrzeugseitigen Hülse vorgesehen, welcher mit einem Schenkel in einen radialen Schlitz einrastet, der an einem modulseitigen Bolzen vorgesehen ist. Dieser Bolzen dringt in die Hülse ein und wird in dieser mittels des Federklipps verriegelt. Der für die gesamte Einrichtung (Hülse, Bolzen, Federklipp) benötigte Bauraum ist relativ groß. Ferner muß, um eine gute Zugänglichkeit der Hülse zu erreichen, die Schnittstelle zwischen Gassackmodul und Fahrzeugteil sehr stark auf die Einrichtung zum Befestigen ausgelegt sein. Aufgrund des notwendigen Bauraums für die Einrichtung und aufgrund der notwendigen guten Zugänglichkeit bestimmt die Einrichtung zum Befestigen sehr stark die Konstruktion von Fahrzeugteil und Gassackmodul im Bereich ihrer gegenseitigen Befestigung. Ferner ist die bekannte Einrichtung relativ kompliziert in ihrer Fertigung, da Bolzen und Hülse in ihrem Außen- bzw. Innenumfang exakt aufeinander abgestimmt sein müssen und auch die Schlitze in der Hülse und im Bolzen in ihrer axialen Lage sehr exakt aufeinander abgestimmt sein müssen.

Aufgabe der Erfindung ist es, eine einfachere Einrichtung zum Befestigen des Gassackmoduls an einem Fahrzeug zu schaffen.

Die Aufgabe wird bei einer Einrichtung nach dem Oberbegriff des Anspruchs 1 dadurch gelöst, daß der Verriegelungskörper an einem Ende um einen zylinderförmigen Vorsprung gebogen und dadurch am Vorsprung geklemmt ist und daß das andere Ende des Verriegelungskörpers als Haken oder Öse ausgebildet ist, welcher/welche in das Gegenstück einrastet.

Darüber hinaus wird diese Aufgabe bei einer Einrichtung zum Befestigen des Gassackmoduls nach dem Oberbegriff des Anspruchs 2 dadurch gelöst, daß der Verriegelungskörper U-förmig gebogen und am Fahrzeugteil oder am Gassackmodul befestigt ist. Ein Schenkel des Verriegelungskörpers ist dazu zwischen zwei Haltebacken geklemmt, und der andere Schenkel ist als Haken oder Öse ausgebildet.

Bei der erfindungsgemäßen Einrichtung sind keine aufwendigen Hülsen- und Bolzenkonstruktionen notwendig, vielmehr reicht es aus, einen Vorsprung oder Haltebacken am Gassackmodul oder am Fahrzeugteil vorzusehen, an dem oder denen der Verriegelungskörper an einem Ende geklemmt wird. Das andere Ende des Verriegelungskörpers ist zu einem Haken oder einer Öse geformt, der/die in das Gegenstück einrastet. Das Gegenstück kann ebenfalls sehr einfach z.B. als Haken oder Öse ausgebildet sein. Indem ein Ende des Verriegelungskörpers als Befestigung desselben dient und das andere Ende der Verriegelung, können Befestigungsstelle und Verriegelungsstelle weit auseinanderliegen, so daß, nicht wie beim Stand der Technik, die Konstruktion von Gassackmodul und Fahrzeugteil sehr stark durch die Einrichtung gepragt ist, sondern umgekehrt: Der Verriegelungskörper kann sich zwischen seinen Enden der für andere Zwecke optimierten Konstruktion von Gassackmodul und Fahrzeugteil anpassen.

Vorzugsweise ist der zylinderförmige Vorsprung am Gassackmodul vorgesehen, so daß der Verriegelungskörper am Gassackmodul vor Befestigung des Moduls auch arretiert ist. Dies erleichtert auch die Montage des Gassackmoduls selbst, denn vor Montage muß nicht ein Verriegelungskörper am Fahrzeugteil arretiert werden, sondern das Gassackmodul kann vom Fahrzeugzulieferer vollständig dem Fahrzeughersteller geliefert werden.

Die Demontage ist auch bei der erfindungsgemäßen Einrichtung gemäß einer bevorzugten Ausführungsform vorgesehen und wird dadurch erreicht, daß der Verriegelungskörper zur Demontage des Gassackmoduls aus seiner Verriegelungsstellung wieder in eine Öffnungsstellung verschiebbar ist.

Gemäß der bevorzugten Ausführungsform ist zumindest eine Rampe vorgesehen, die beim Andrücken und/oder Drehen des Gassackmoduls den Verriegelungskörper in seine Öffnungsstellung verschiebt. Übliche Rampen sind beispielsweise keilförmige Teile oder Abschnitte, die auch am Verriegelungskörper oder am Gegenstück selbst vorgesehen sein können.

Wenn der Verriegelungskörper am Fahrzeugteil oder am Gassackmodul befestigt ist, indem ein Schenkel des U-förmig gebogenen Verriegelungskörpers, nämlich sein Befestigungsende zwischen zwei Haltebacken geklemmt ist, ist gemäß einer Ausgestaltung ein an den Schenkel angrenzendes Eckteil des Verriegelungskörpers um einen Bolzen geschlungen. Die Haltebacken und der Bolzen sind dabei am Fahrzeugteil bzw. am Gassackmodul angeordnet, je nachdem, ob der Verriegelungskörper am Fahrzeugteil oder am Modul befestigt ist. Bei dieser Ausführungsform ist gewährleistet, daß bei der Montage selbst keine losen Teile mehr verwendet werden müssen, sondern daß die Rasteinrichtung bereits vollständig fest an einem Teil arretiert ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine perspektivische Ansicht einer erfindungsgemäßen Einrichtung gemäß einer ersten Ausführungsform;
Figur 2 ein an einer Lenkradnabe mit drei Rasteinrichtungen gemäß Figur 1 befestigtes Gassackmodul;
Figur 3 in perspektivischer Ansicht eine zweite Ausführungsform der erfindungsgemäßen Einrichtung; und
Figur 4 ein an einer Lenkradnabe mit drei Rasteinrichtungen nach Figur 3 befestigtes Gassackmodul.

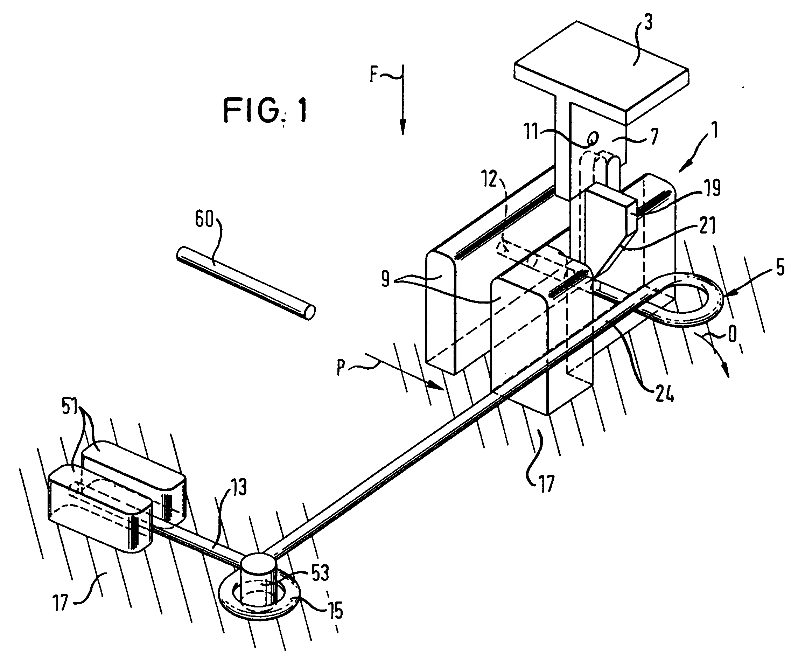

In Figur 1 ist eine Einrichtung zur Befestigung eines Gassackmoduls 3 an einem Fahrzeugteil in Form einer Rasteinrichtung 1 gezeigt. Das Gassackmodul 3 ist dabei lediglich schematisch durch eine Unterseite eines Gehäuses dargestellt. Die Rasteinrichtung 1 umfaßt einen Verriegelungskörper 5. Dieser hat eine U-Form, die durch Biegen eines Federstahldrahtes gebildet wird. Ein Schenkel 13 des Verriegelungskörpers 5 ist zwischen zwei Haltebacken 51 geklemmt, die einstückig mit einer Lenkradnabe 17, welche durch die Grundebene dargestellt ist, ausgebildet sind. Ein ebenfalls einstückig mit der Lenkradnabe 17 ausgebildeter Bolzen 53 wird von einem um 270° gebogenen Eckteil 15 des Verriegelungskörpers 5 umschlungen, so daß der Verriegelungskörper 5 fest an der Lenkradnabe 17 arretiert ist. Im Bereich eines dem geklemmten Schenkel 13 gegenüberliegenden Schenkels des Verriegelungsteils 5 ist eine Steckzungenverbindung vorgesehen, die aus einem ersten Steckzungenteil 7, welches mit dem Gassackmodul 3 verbunden ist, und einem aus zwei parallelen, voneinander beabstandeten Leisten bestehenden zweiten Steckzungenteil 9 als an der Lenkradnabe 17 befestigtes Gegenstück gebildet ist. Zwischen die beiden parallelen Leisten ist das erste Steckzungenteil 7 einschiebbar. Quer zu einer Einführrichtung F des ersten Steckzungenteils 7 erstreckt sich eine Öffnung 11 durch das Steckzungenteil 7, und durch die beiden Leisten des zweiten Steckzungenteils 9 erstreckt sich eine zur Öffnung 11 fluchtende Öffnung 12.

An der rechten Leiste des zweiten Steckzungenteils 9 ist ein Schieberkörper 19 mit einem Abschnitt in Form einer Rampe 21 vorgesehen. Der Schieberkörper 19 ist in einer nicht vollständig gezeigten Parallelführung in der rechten Leiste in Einführrichtung F verschiebbar. Beim Herunterdrücken des Schieberkörpers 19 drückt die Rampe 21 gegen einen Quersteg 24 des Verriegelungskörpers 5, so daß dieser aus seiner Verriegelungsstellung nach rechts um die Achse des Bolzens 53 nach außen bewegt wird, wie es durch den Pfeil O gezeigt ist. Die Abmessungen des Schieberkörpers 19 und die Länge der Rampe 21 sind in Figur 1 nicht maßstäblich gezeigt. Sie müssen jedoch so auf die Abstände der Leisten des zweiten Steckzungenteils 9 abgestimmt sein, daß der Schieberkörper 19 den Verriegelungskörper 5 ausreichend so weit nach rechts schiebt, daß der Zwischenraum zwischen den Leisten des zweiten Steckzungenteils 9 frei ist, damit das erste Steckzungenteil 7 in diesen Zwischenraum eindringen kann.

Die Öffnungen 11, 12 sind ebenfalls nur schematisch gezeigt, denn sie sind vorzugsweise leicht schlitzförmig ausgebildet, da der Verriegelungskörper 5 eine Schwenkbewegung um die Achse des Bolzens 53 macht und in die Öffnungen 11, 12 eingeführt und wieder aus ihnen herausgeschoben werden muß, ohne sich zu verklemmen.

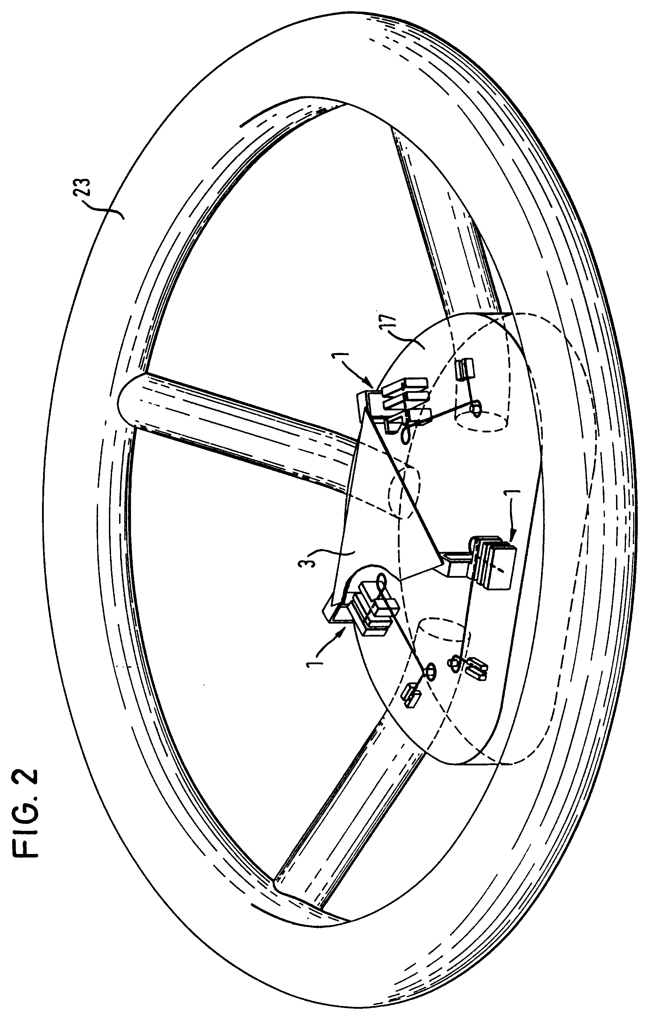

In Figur 2 ist ein Fahrzeuglenkrad 23 mit der Lenkradnabe 17 gezeigt, auf der ein Gassackmodul 3, welches durch eine dreiecksförmige Ebene angedeutet ist, über drei Rasteinrichtungen 1, die den in Figur 1 gezeigten Rasteinrichtungen 1 entsprechen, arretierbar ist.

Im folgenden wird die Montage des Gassackmoduls 3 auf der Lenkradnabe 17 anhand der Figuren 1 und 2 erläutert. In der in Fig. 1 gezeigten Stellung erstreckt sich der Verriegelungskörper 5 durch die Öffnungen 12. Das Gassackmodul 3 wird senkrecht zur Lenkradnabe 17 in Richtung F gedrückt und zwar in einer solchen Stellung, daß das erste Steckzungenteil 7 in seiner Lage auf den Zwischenraum zwischen den Leisten des zugeordneten zweiten Steckzungenteils 9 abgestimmt ist. Während des Andrückens des Gassackmoduls 3 erfaßt das erste Steckzungenteil 7 den Schieberkörper 19 an einem Absatz, welcher in den Zwischenraum zwischen den Leisten hineinragt. Damit wird durch die Bewegung des Gassackmoduls 3 in Richtung F zur Lenkradnabe 17 der Schieberkörper 19 mit in Richtung Lenkradnabe 17 gedrückt, so daß die Rampe 21 den Verriegelungskörper 5 im Bereich des Quersteges 24 erfaßt und in Richtung des Pfeiles O nach außen drückt. Der Verriegelungskörper 5, welcher sich zuvor durch die Öffnungen 12 hindurch erstreckt hat, wird dadurch zumindest aus der Öffnung 12 im linken Steg herausgezogen. Der Zwischenraum zwischen den Leisten des zweiten Steckzungenteils 9 ist damit für den Eintritt des ersten Steckzungenteils 7 frei. Es ergibt sich eine Öffnungsstellung. Der Schieberkörper 19 ist in seiner Lage so auf die Steckzungenteile 7 und 9 abgestimmt, daß er das Verriegelungsteil 5 nur so lange in Richtung des Pfeiles O nach außen drückt, bis der unterste Teil des ersten Steckzungenteils 7 in den Bereich der Öffnungen 12 gelangt. Anschließend gibt der Schieberkörper 19 die Bewegung des Verriegelungsteils 5 wieder frei, so daß dieses in Gegenrichtung, d.h. auf die äußere Seitenfläche des ersten Steckzungenteils 7 drückt. Sobald die Öffnungen 11 und 12 miteinander fluchten, springt der Verriegelungskörper 5 aus der Öffnungsstellung in seine Verriegelungsstellung zurück und erstreckt sich durch die Öffnungen 11, 12 hindurch, um die Steckzungenteile 7 und 9 zu verriegeln. Damit wird eine Art Schnappmechanismus erzeugt.

Die Montage des Airbagmoduls 3 erfolgt somit lediglich durch Andrücken.

Zur Demontage des Airbagmoduls 3 muß ein Bolzen 60 durch eine Bohrung in der Lenkradrückseite gesteckt werden, der dann, wie durch den Pfeil P angedeutet, gegen den Verriegelungskörper 5 drückt und diesen in die Öffnungsstellung befördert. Wird das Gassackmodul 3 demontiert, so wandert durch eine nicht gezeigte Federeinrichtung der Schieberkörper 19 wieder in die in Figur 1 gezeigte Ausgangsstellung zurück.

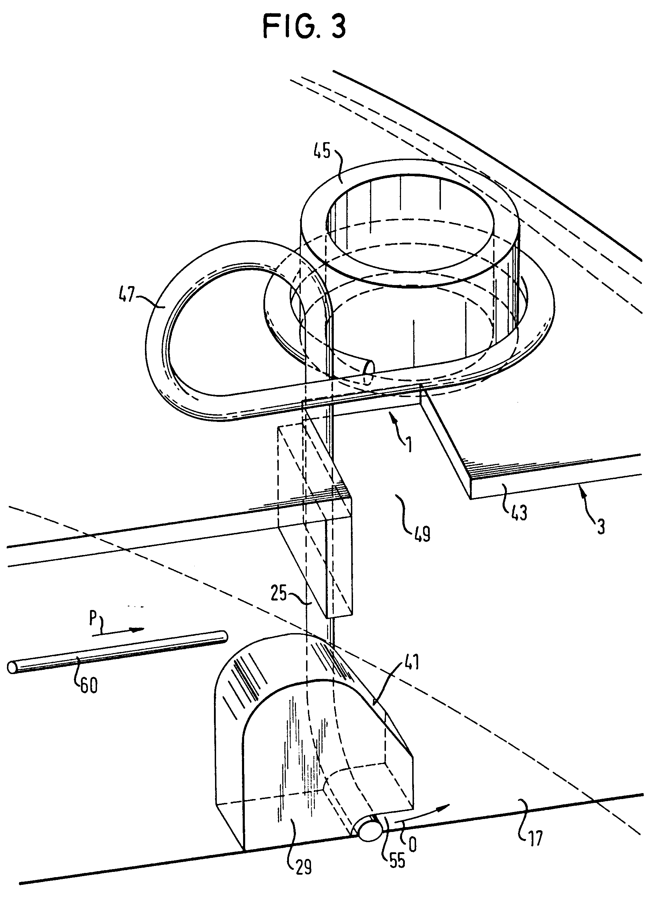

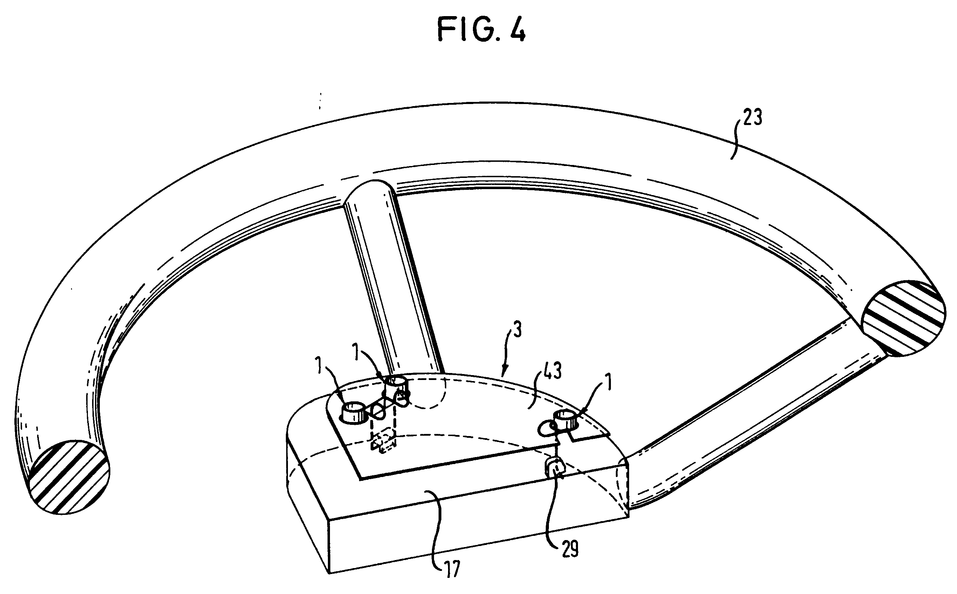

Die Figuren 3 und 4 zeigen eine zweite Ausführungsform der Rasteinrichtung 1. Der Verriegelungskörper 25 ist ein zu einem Haken gebogener Federstahl, der an einer Grundplatte 43 des Gassackmoduls 3 befestigt ist, indem er um einen zylinderförmigen Vorsprung 45 in der Grundplatte 43 geklemmt wird. Der zylinderförmige Vorsprung 45 ist durch Tiefziehen aus der Grundplatte 43 geformt. Der annähernd 360°-Biegung um den zylinderförmigen Vorsprung 45 folgt eine 270°-Biegung 47 des Verriegelungskörpers 25. Es ergeben sich damit zwei schleifenförmige Biegungen, die in annähernd senkrecht zueinander angeordneten Ebenen verlaufen. Nach der Biegung 47 erstreckt sich der Verriegelungskörper 25 in Richtung zur Lenkradnabe 17 durch eine Öffnung 49 in der Grundplatte 43 hindurch. Das Gegenstück für den als Haken ausgebildeten Verriegelungskörper 25 bildet ein ebenfalls hakenförmiges Widerlager 29 an der Lenkradnabe 17. Das Widerlager 29 hat einen abgeschrägten Teil, der eine Rampe 41 bildet. Die Rampe 41 bewirkt, daß beim Andrücken des Gassackmoduls 3 in Richtung Lenkradnabe 17 der Verriegelungskörper 25 in Richtung des Pfeiles O in seine Öffnungsstellung federelastisch gebogen wird, bis er schließlich beim Erreichen der Lenkradnabe 17 in eine Ausnehmung 55 im Widerlager 29 schnappt. Je nach Lage des Widerlagers 29 zum Gassackmodul 3 kann es erforderlich sein, daß beim Montieren des Gassackmoduls 3 neben einem Andrücken auch noch ein Drehen des Gassackmoduls 3 erforderlich ist, damit das zu einem Haken gebogene freie Ende des Verriegelungskörpers 25 in die Ausnehmung 55 eindringt.

Zum Demontieren des so befestigten Gassackmoduls 3 muß lediglich, ähnlich zur Ausführungsform gemäß Figur 1, der Bolzen 60 in Richtung des Pfeiles P gegen den Verriegelungskörper 25 gedrückt werden, so daß dieser aus seiner Verriegelungsstellung in seine Öffnungsstellung verschoben wird, wodurch das Gassackmodul 3 entfernt werden kann.

Der Verriegelungskörper 25 kann auch zu einer Öse gebogen sein, in die dann ein entsprechend gestaltetes Gegenstück eingreift.

In Figur 4 sind drei auf der Grundplatte 43 befestigte Rasteinrichtungen 1 gezeigt, welche in mehrere Widerlager 29 eingreifen. Wenn die Ausnehmungen 55 in den Widerlagern 29 nicht in entgegengesetzte Richtungen weisen, kann das Gassackmodul 3 auch durch Andrücken und Drehen oder lediglich durch Drehen wie bei einem Bajonettverschluß befestigt werden, damit dadurch die Verriegelungskörper 25 von den Widerlagern 29 erfaßt werden.

## Patentansprüche

1. Einrichtung zum Befestigen eines Gassackmoduls (3) an einem Fahrzeugteil, die als Rasteinrichtung (1) ausgebildet ist, wobei durch Andrücken und/oder Drehen des Gassackmoduls (3) ein Verriegelungskörper (25) aus Federstahl in ein entsprechend geformtes Gegenstück eingreift, um so das Gassackmodul (3) am Fahrzeugteil zu arretieren, dadurch gekennzeichnet, daß der Verriegelungskörper (25) an einem Ende um einen zylinderförmigen Vorsprung (45) gebogen und dadurch am Vorsprung (45) geklemmt ist und daß das andere Ende des Verriegelungskörpers (25) als Haken oder Öse ausgebildet ist, welcher/welche in das Gegenstück einrastet.

2. Einrichtung zum Befestigen eines Gassackmoduls (3) an einem Fahrzeugteil, die als Rasteinrichtung (1) ausgebildet ist, wobei durch Andrücken und/oder Drehen des Gassackmoduls (3) ein Verriegelungskörper (5) aus Federstahl in ein entsprechend geformtes Gegenstück eingreift, um so das Gassackmodul (3) am Fahrzeugteil zu arretieren, dadurch gekennzeichnet, daß der Verriegelungskörper (5) U-förmig gebogen und am Fahrzeugteil oder am Gassackmodul (3) befestigt ist, indem ein Schenkel (13) des Verriegelungskörpers (5) zwischen zwei Haltebacken (51) geklemmt ist, und daß der andere Schenkel als Haken oder Öse ausgebildet ist.

3. Einrichtung nach Anspruch 2, dadurch gekennzeichnet, daß ein an den zwischen zwei Haltebacken (51) geklemmten Schenkel (13) angrenzendes Eckteil (15) des Verriegelungskörpers (5) um einen Bolzen (53) geschlungen ist.

4. Einrichtung nach einem der vorstehenden Ansprüche, dadurch gekennzeichnet, daß der Verriegelungskörper (5; 25) zur Demontage des Gassackmoduls (3) aus einer Verriegelungsstellung in eine Öffnungsstellung verschiebbar ist.

5. Einrichtung nach einem der vorstehenden Ansprüche, dadurch gekennzeichnet, daß die Rasteinrichtung (1) als Schnappmechanismus ausgebildet ist.

6. Einrichtung nach einem der vorstehenden Ansprüche, dadurch gekennzeichnet, daß zumindest eine Rampe (21; 41) vorgesehen ist, die beim Andrücken und/oder Drehen des Gassackmoduls (3) den Verriegelungskörper (5; 25) in seine Öffnungsstellung verschiebt.

7. Einrichtung nach einem der vorstehenden Ansprüche, dadurch gekennzeichnet, daß das Gegenstück als Haken oder Öse ausgebildet ist.

8. Einrichtung nach einem der vorstehenden Ansprüche, dadurch gekennzeichnet, daß der Vorsprung (45) am Gassackmodul vorgesehen ist.

## Claims

1. A fixture for the attachment of a gas bag module (3) on a vehicle part, the fixture being designed as a catch fixture (1), with a locking member (25) made of spring steel fitting into a correspondingly formed counter member by pressing against and/or turning of the gas bag module (3) in order to so arrest the gas bag module (3) on the vehicle part, characterized in that at one end the locking member (25) is trained around a cylindrical projection (45), thus gripping the projection (45), and that the other end of the locking member (25) is designed in the form of a hook or an eye which snaps into the counter member.

2. A fixture for the attachment of a gas bag module (3) on a vehicle part, the fixture being designed as a catch fixture (1), with a locking member (5) made of spring steel fitting into a correspondingly formed counter member by pressing against and/or turning of the gas bag module (3) in order to so arrest the gas bag module (3) on the vehicle part, characterized in that the locking member (5) is bent in the shape of a U and is secured to the vehicle part or to the gas bag module (3) by having a limb (13) of the locking member (5) gripped between two holding jaws (51), and that the other limb is designed in the form of a hook or an eye.

3. The fixture as claimed in claim 2, characterized in that a corner part (15) of the locking member (5), which is adjacent to the limb (13) gripped between two holding jaws (51), is trained around a bolt (53).

4. The fixture as claimed in any of the preceding claims, characterized in that the locking member (5; 25) is able to be slid out of a locking position into a release position in order to detach the gas bag module (3).

5. The fixture as claimed in any of the preceding claims, characterized in that the catch fixture (1) is designed in the form of a snap-action mechanism.

6. The fixture as claimed in any of the preceding claims, characterized by the provision of at least one ramp member (21; 41) adapted, on pressing against and/or turning of the gas bag module (3), to displace the locking member (5; 25) into its release position.

7. The fixture as claimed in any of the preceding claims, characterized in that the counter member is designed in the form of a hook or an eye.

8. The fixture as claimed in any of the preceding claims, characterized in that the projection (45) is provided on the gas bag module.

## Revendications

1. Dispositif pour fixer un module de coussin à gaz (3) à une partie de véhicule, ledit dispositif étant conçu sous la forme d'un dispositif à cran (1), un corps de verrouillage (25) en acier à ressort s'engageant dans une pièce antagoniste de forme correspondante par pression et/ou rotation du module de coussin à gaz (3) afin de bloquer ainsi le module de coussin à gaz (3) sur la partie de véhicule, caractérisé en ce qu'à l'une de ses extrémités le corps de verrouillage (25) est enroulé autour d'une saillie cylindrique (45) et est ainsi bloqué au niveau de ladite saillie (45), et en ce que l'autre extrémité du corps de verrouillage (25) est conçue en forme de crochet ou d'oeillet qui s'enclenche dans la pièce antagoniste.

2. Dispositif pour fixer un module de coussin à gaz (3) à une partie de véhicule, ledit dispositif étant conçu sous la forme d'un dispositif à cran (1), un corps de verrouillage (5) en acier à ressort s'engageant dans une pièce antagoniste de forme correspondante par pression et/ou rotation du module de coussin à gaz (3) afin de bloquer ainsi le module de coussin à gaz (3) sur la partie de véhicule, caractérisé en ce que le corps de verrouillage (5) est cintré en forme de U et fixé à la partie de véhicule ou au module de coussin à gaz (3) par le fait qu'une branche (13) du corps de verrouillage (5) est pincée entre deux mâchoires de retenue (51), et en ce que l'autre branche est conçue en forme de crochet ou d'oeillet.

3. Dispositif selon la revendication 2, caractérisé en ce qu'une partie de coin (15) du corps de verrouillage (5) adjacente à la branche (13) pincée entre deux mâchoires de retenue (51) est enroulée autour d'un téton (53).

4. Dispositif selon l'une des revendications précédentes, caractérisé en ce que, pour démonter le module de coussin à gaz (3), le corps de verrouillage (5 ; 25) peut être amené d'une position verrouillée à une position ouverte.

5. Dispositif selon l'une des revendications précédentes, caractérisé en ce que le dispositif à cran (1) est conçu sous la forme d'un mécanisme à déclic.

6. Dispositif selon l'une des revendications précédentes, caractérisé en ce qu'il est prévu au moins une rampe (21 ; 41) qui, en cas de pression et/ou de rotation du module de coussin à gaz (3), fait passer le corps de verrouillage (5 ; 25) dans sa position ouverte.

7. Dispositif selon l'une des revendications précédentes, caractérisé en ce que la pièce antagoniste est conçue en forme de crochet ou d'oeillet.

8. Dispositif selon l'une des revendications précédentes, caractérisé en ce que la saillie (45) se trouve sur le module de coussin à gaz.
